# EUROPÄISCHE PATENTANMELDUNG

(11) **EP 4 718 174 A1**
(43) Veröffentlichungstag der Anmeldung: **01.04.2026**
(21) Anmeldenummer: 24202953.6
(22) Anmeldetag: 26.09.2024
(51) Int. Cl.: G05B 19/042

(54) **COMPUTER-IMPLEMENTIERTE EINGRIFFSPROGNOSE IN CHEMISCHEN PRODUKTIONSANLAGEN**

(71) Anmelder: Saltigo GmbH, 51369 Leverkusen (DE); LANXESS Deutschland GmbH, 50569 Köln (DE)
(72) Erfinder: Stiller, Julian, 44289 Dortmund (DE); Faller, Michael Rasit, 51103 Köln (DE); Siekmann, Tobias, 50679 Köln (DE); Dembek, Marcel, 50374 Erfstadt (DE)
(74) Vertreter: Matzke, Michael

(57) **Zusammenfassung**

Offenbart ist ein computer-implementiertes Verfahren zur Eingriffsprognose in eine chemische Produktionsanlage sowie eine zugehörige Datenverarbeitungsvorrichtung und ein Computerprogramm.

## Beschreibung

### TECHNISCHES GEBIET

Die vorliegende Erfindung betrifft im Allgemeinen das Feld der chemischen Produktion und im speziellen Verfahren zur Eingriffsprognose in eine chemische Produktionsanlage.

### HINTERGRUND

In der produzierenden Industrie (z.B. der chemischen Industrie) werden zahlreiche Produkte nach Batchverfahren produziert. In der Regel sind dafür mehrere technische Apparate zu einem Prozess zusammengefasst, wobei innerhalb einer Produktionsanlage eine Vielzahl von Prozessen ablaufen können. Oft wird in den jeweiligen Prozessen dann über mehrere Monate bis hin zu mehreren Jahren nur ein einziges Produkt in einer Vielzahl von Partien produziert. Eine Partie durchläuft diesen Prozess in einer definierten, vorgegebenen Reihenfolge. Die Wertschöpfung des gesamten Prozesses wird gesteigert, wenn mehr Partien pro Zeit unter sonst gleichen Bedingungen (Partiegröße, Ausbeute, Qualität) produziert werden. Da die Apparate des Prozesses für jedes Produkt langfristig fest eingeplant sind und sowohl die Reihenfolge, in der eine Partie die Apparate des Prozesses durchläuft, als auch die Reihenfolge der Verfahrensschritte je Apparat festgelegt sind, kann eine Steigerung der Wertschöpfung des Produktionsbetriebs in der Regel nicht durch eine bessere Planung dieser Reihenfolgen erfolgen.

Die Wertschöpfung und Effizienz des Produktionsbetriebs kann allerdings gesteigert werden durch die Optimierung der Taktzeiten der Prozesse. Eine Optimierung der Taktzeiten eines Prozesses kann durch die Reduktion der mittleren Taktzeit und durch die Reduktion von Taktzeitschwankungen erfolgen. Letzteres führt zusätzlich zu einer besseren Planbarkeit des Prozesses.

Eine Möglichkeit dies zu erreichen, liegt in der effizienten Nutzung von Ressourcen. Aufgrund der Komplexität derartiger Produktionsanlagen, in denen mehrere Prozesse Abhängigkeiten untereinander aufweisen (z.B. hinsichtlich der genutzten bzw. benötigten Ressourcen für Eingriffe), ist es schwierig, die zur Verfügung stehenden Ressourcen optimal zu nutzen. Um bei Ressourcenengpässen eine möglichst hohe Wertschöpfung zu generieren, bedarf es somit einer aktuellen Priorisierung der Prozesse und Apparate sowie eine hohe Transparenz hierüber, damit Ressourcen für Eingriffe möglichst effizient genutzt werden können.

Somit ist es ein Ziel der vorliegenden Erfindung, ein Verfahren zur Eingriffsprognose in eine chemische Produktionsanlage bereitzustellen, welches die zuvor genannten Nachteile des Stands der Technik zumindest teilweise überwindet.

### ZUSAMMENFASSUNG DER ERFINDUNG

Dies wird durch die in den unabhängigen Ansprüchen definierten Gegenstände gelöst. Vorteilhafte Modifikationen von Ausführungsformen der vorliegenden Offenbarung sind in den abhängigen Ansprüchen sowie in der Beschreibung und den Figuren definiert.

Ein Aspekt der Erfindung betrifft ein Verfahren zur Eingriffsprognose in eine chemische Produktionsanlage. Das Verfahren kann computer-implementiert sein.

Das Verfahren kann ein Empfangen von Produktionsdaten der Produktionsanlage umfassen. Die Produktionsdaten können Zeitinformationen über erfolgte, planmäßige Eingriffe in Sequenzen für eine Mehrzahl von Partien, welche einen Satz von Apparaten der Produktionsanlage durchlaufen, umfassen.

Die Produktionsdaten können in Form eines Streams und/oder eines Logs empfangen werden. Im Falle eines Streams können die Produktionsdaten (z.B. mittels entsprechender Sensoren) aufgenommen oder gemessen werden und per Stream (z.B. in Echtzeit) gesendet und empfangen werden. Somit können die Produktionsdaten auch als Messdaten verstanden werden, welche einen aktuellen, physischen Zustand der Produktionsanlage (d.h. einer echten, physischen Produktionsanlage in welcher ein echter, physischer Produktionsprozess abläuft) repräsentieren. Im Falle eines Logs können die Produktionsdaten (z.B. mittels entsprechender Sensoren) aufgenommen oder gemessen werden, in ein Logfile (z.B. gespeichert in einer Datenbank) geschrieben werden und von diesem abgerufen bzw. empfangen werden. Die Produktionsdaten können eine Form aufweisen, welche für jeden erfolgten (d.h. bereits durchgeführten) Eingriff eine mit dem Eingriff assoziierte Zeitinformation (z.B. einen Zeitstempel) umfasst. Der Eingriff kann dabei durch einen Namen (z.B. eine Beschreibung der Tätigkeit) und/oder einen Identifizierer (z.B. eine eindeutige ID, einen Index, eine Nummer etc.) repräsentiert werden. Zusätzlich kann die Form der Produktionsdaten die zugehörige Sequenz (d.h. die Sequenz, in die ein Eingriff stattgefunden hat), beinhalten bzw. anzeigen (z.B. mittels einer eindeutigen ID, eines Index, einer Nummer etc.). Eine Sequenz wie hierin verwendet kann einen Rezeptschritt, einen Teil eines Rezeptschritts oder auch mehrere Rezeptschritte, ein sich wiederholendes Muster eines oder mehrerer Rezeptschritte (z.B. identifizierbar anhand entsprechender Information der Rezeptschritte, wie z.B. Name, Index oder eine Kombination davon) umfassen.

Das Verfahren kann ein Bestimmen einer Priorisierungsdefinition, welche eine Priorisierungsreihenfolge des Satzes von Apparaten und eines zugehörigen Satzes von Prozessen der Produktionsanlage angibt, umfassen. Der Satz von Apparaten kann Apparate aus einem zugehörigen Prozess oder auch Apparate unterschiedlicher Prozesse umfassen.

Ein "Satz" wie hier verwendet kann eine Menge von einem oder mehreren Elementen beschreiben. Mit anderen Worten kann ein "Satz" auch als "ein oder mehrere" oder als "zumindest ein" verstanden werden.

Die Priorisierungsreihenfolge zeigt eine Wichtigkeit der Apparate untereinander an. Dabei kann jedem Apparat eine Priorität zugeordnet sein. Dabei kann ein Apparat mit der höchsten Priorität an erster Stelle innerhalb der Priorisierungsreihenfolge stehen und ein Apparat mit der niedrigsten Priorität an letzter Stelle innerhalb der Priorisierungsreihenfolge stehen. Mit anderen Worten, die Apparate können innerhalb der Priorisierungsreihenfolge absteigend gemäß ihrer Priorität angeordnet sein.

Die Priorität kann dabei von einer Batchzeit abhängig sein. Beispielsweise kann ein Engstellenapparat (d.h. ein Apparat mit einer hohen Batchzeit) eine höhere Priorität als ein Apparat mit niedrigerer Batchzeit aufweisen. Somit kann der Engstellenapparat innerhalb der Priorisierungsreihenfolge vor dem Apparat mit niedrigerer Batchzeit angeordnet sein.

Innerhalb eines Apparates durchläuft eine Partie typischerweise verschiedene Verfahrensschritte, welche jeweils wertschöpfend oder nicht wertschöpfend sein können. Die Dauer dieser Verfahrensschritte kann sich von Partie zu Partie unterscheiden. Die Summe der wertschöpfenden Verfahrensschritte kann als Batchzeit einer Partie bezeichnet werden. Von Partie zu Partie unterliegt auch die Batchzeit eines Apparates einer Schwankung. Die Ausprägungen und Gründe für diese Schwankungen sind unterschiedlich und können sich im Verlauf der Zeit dynamisch ändern. Dies gilt für jeden einzelnen Apparat des Prozesses. Die Summe der nicht wertschöpfenden Verfahrensschritte kann als Wartezeiten einer Partie bezeichnet werden. Solche Wartezeiten entstehen beispielsweise, weil Ressourcen für die benötigten Eingriffe in die Prozesse nicht verfügbar sind. Verfahrensschritte können einen oder mehrere Rezeptschritte umfassen. Die Taktzeit kann als die Aufenthaltsdauer einer Partie in einem Apparat bezeichnet werden. Von Partie zu Partie kann die Taktzeit eines Apparats einer Schwankung unterliegen. Somit ergeben sich die mittlere Taktzeit und die Taktzeitschwankung des gesamten Prozesses aus den Taktzeiten und Taktzeitschwankungen der einzelnen Apparate, die sich wiederum aus den Batchzeiten und Wartezeiten sowie deren Schwankungen ergeben, welche sich wiederum aus den Rezeptschrittdauern sowie deren Schwankungen zusammensetzen.

In einer Produktionsanlage können jedoch auch mehrere Prozesse (d.h. der Satz von Prozessen beinhaltet mehr als einen Prozess) ablaufen (z.B. gleichzeitig, simultan, nacheinander, teilweise überlappend etc.). Jedem Prozess ist ein Satz von Apparaten zugehörig (d.h. als Teil von einem Prozess durchläuft eine Partie jeden Apparat des Satzes von Apparaten der dem Prozess zugehörig ist). Dies kann dazu führen, dass es bei einer isolierten Verwendung der einzelnen Priorisierungsreihenfolgen (d.h. die Apparate eines Prozesses nach Priorität geordnet) nicht zu einer Maximierung der Wertschöpfung kommt. Stattdessen bedarf es der Verwendung eines Gesamtüberblicks, in welchem die Apparate nicht nur innerhalb ihres Prozesses, sondern auch im Verhältnis zu Apparaten anderer Prozesse sowie die einzelnen Prozesse unter sich priorisiert und dargestellt werden können.

Dies wird durch die anspruchsgemäße "Priorisierungsdefinition" ermöglicht. Mit anderen Worten kann die Priorisierungsdefinition als eine Gesamtübersicht bzw. Gesamtdarstellung einer Priorisierungsreihenfolge alle Apparate über aller Prozesse hinweg (d.h. über alle in der Produktionsanlage integrierten Apparaten) verstanden werden. Dies ist nötig, da nicht zwangsläufig alle Apparate eines höher priorisierten Prozesses eine höhere Priorisierung als Apparate eines niedriger priorisierten Prozesses haben. Vielmehr kann es vorkommen, dass der wichtigste Apparat (z.B. mit der höchsten Priorität) eines niedriger priorisierten Prozesses wichtiger (z.B. hinsichtlich der Reduzierung der Taktzeit und somit der Produktivität der Produktionsanlage) als ein unwichtiger Apparat (z.B. mit der niedrigsten Priorität) eines höher priorisierten Prozesses ist.

Das Verfahren kann ein Bestimmen einer aktuell ausgeführten Sequenz in einem Apparat des Satzes von Apparaten umfassen.

Das Verfahren kann ein Bestimmen von Prognoseinformationen mindestens eines mit der aktuell ausgeführten Sequenz assoziierten erwarteten Eingriffs basierend auf den Zeitinformationen über erfolgte Eingriffe, umfassen. Dabei kann es sich um einen Handeingriff, einen Eingriff einer Maschine oder eines Roboters oder der gleichen handeln.

Dabei können die Prognoseinformationen für einen vordefinierten, zukünftigen Zeitraum bestimmt werden. Zum Beispiel können die Prognoseinformationen für die nächsten 12 Stunden bestimmt werden und zeigen somit erwartete Eingriffe innerhalb dieser nächsten 12 Stunden an. Zum Bestimmen der Prognoseinformationen kann ein statisches Prognose-Modell (d.h. nicht änderbar hinsichtlich der verwendeten Parameter) oder auch ein dynamisches Modell (z.B. änderbar hinsichtlich der berücksichtigten Parameter wie etwa anderer statistischer Kenngrößen wie z.B. der Standardabweichung, Berücksichtigung der Wahrscheinlichkeit wie oft eine Sequenz in der Vergangenheit aufgetreten ist etc.) verwendet werden. Das dynamische Modell kann ein Modell des Maschinellen Lernens umfassen. Ferner kann im Falle einer neuen Sequenz (d.h. eine Sequenz, die zum ersten Mal ausgeführt wird) die Dauer nach dem ersten Durchlauf bestimmt werden. Die Dauer kann anschließend beim Bestimmen der Prognoseinformationen berücksichtigt werden.

Das Verfahren kann ein Anzeigen einer basierend auf den Prognoseinformationen aktualisierten Priorisierungsdefinition umfassen. Das Anzeigen kann auf einer elektronischen Anzeigevorrichtung (z.B. einem Monitor, einem Tablet, einem Smartphone etc.) erfolgen. Das Anzeigen kann während der Ausführung der aktuell ausgeführten Sequenz erfolgen. Die aktualisierte Priorisierungsdefinition kann zur Verwendung bei einer Ressourcenplanung für Eingriffe in die Produktionsanlage geeignet sein.

Somit stellt das Verfahren eine Lösung bereit, um selbst hochkomplexe Produktionsanlagen zu analysieren und eine transparente, objektive Übersicht über die Produktionsanlage mittels der Priorisierungsdefinition bereitzustellen. Mit anderen Worten stellt das Verfahren eine computer-basierte Unterstützung für Anwender bei der Ressourcenplanung der Produktionsanlage bereit (d.h. eine gezielte Mensch-Maschine-Interaktion bei der durchgeführten technischen Aufgabe der Produktionsplanung). Basierend auf dieser Priorisierungsdefinition können Ineffizienzen im Prozess verhindert werden, welche ansonsten möglicherweise aufgrund der Komplexität und Intransparenz des Prozesses aufgetreten wären. Entsprechend können auf Basis der angezeigten Priorisierungsdefinition effiziente Planungsmaßnahmen der Prozesse und/oder der Produktionsanlage (z.B. hinsichtlich der Ressourcen für Eingriffe) bestimmt werden. Gleichzeitig können auf subjektiven Einschätzungen beruhende, aber ineffiziente Maßnahmen vermieden werden.

Bei den Prozessen kann es sich um rezeptgesteuerte Prozesse handeln. Zusätzlich kann es sich um einen reinen Batchprozess und/oder einen Prozess, welcher Anteile von kontinuierlichen Prozessen enthalten kann, handeln. Ein Batchprozess umfasst mindestens einen Apparat mit Batch-Fahrweise. Ein Batchprozess kann linear oder verzweigt sein. Abgesehen von der chemischen Produktion kann das Verfahren auch zur Eingriffsprognose von Produktionsanlagen in anderen Domänen verwendet werden wie z.B. Pharmazie, Automobil, Elektronik, Biotechnologie, Luft- und Raumfahrt, metallverarbeitende Industrie, kunststoffverarbeitende Industrie, oder Lebensmittelindustrie.

In einem weiteren Aspekt können die Prognoseinformationen Zeitinformationen und zugehörige Wahrscheinlichkeitsinformationen für den mindestens einen erwarteten Eingriff umfassen. Dabei kann das Bestimmen von Prognoseinformationen des mindestens einen erwarteten Eingriffs ein Bestimmen eines oder mehrerer zeitlicher Abstände basierend auf den Zeitinformationen über die erfolgten Eingriffe zu der aktuell ausgeführten Sequenz, um die Zeitinformationen für den mindestens einen erwarteten Eingriff zu erhalten, umfassen. Zum Beispiel kann bestimmt werden, wie groß die zeitlichen Abstände zwischen der aktuell ausgeführten Sequenz und erfolgten Eingriffen innerhalb einer vergangenen Zeitperiode waren. Mit anderen Worten, wurde bestimmt, dass aktuell die Sequenz "X" ausgeführt wird, wird bestimmt wie groß die zeitlichen Abstände in der Vergangenheit zwischen Sequenz "X" und den danach erfolgten Eingriffen waren. Die Abstände können beispielsweise anhand der jeweiligen Startzeitpunkte der Sequenz und den erfolgten Eingriffen ermittelt werden. Die vergangene Zeitperiode kann durch Zeitinformationen, welche die Produktionsdaten umfassen, angegeben werden (z.B. die letzten 30 Tage und/oder die letzten 30 Partien).

Zusätzlich oder alternativ kann dabei das Bestimmen von Prognoseinformationen des mindestens einen erwarteten Eingriffs ein Bestimmen einer statistischen Verteilung der bestimmten einen oder mehreren zeitlichen Abstände, um die Wahrscheinlichkeitsinformationen für den mindestens einen erwarteten Eingriff zu erhalten, umfassen.

Durch das Bereitstellen von Prognoseinformationen, welche neben den Zeitinformationen (z.B. ein Zeitpunkt, an dem ein Eingriff erwartet wird) auch zugehörige Wahrscheinlichkeitsinformationen (z.B. mit einer Wahrscheinlichkeit von 80% tritt der erwartete Eingriff an dem erwarteten Zeitpunkt ein) beinhalten, können unregelmäßige Eingriffe (z.B. Auffüllen von gemeinsam genutzten Vorlagen oder Entleeren von Sumpfbehältern) effizienter geplant werden.

In einem weiteren Aspekt kann die statistische Verteilung einen ersten Wahrscheinlichkeits-Zeitwert, insbesondere ein erstes Quartil, einen zweiten Wahrscheinlichkeits-Zeitwert, insbesondere einen Median, und einen dritten Wahrscheinlichkeits-Zeitwert, insbesondere ein drittes Quartil, umfassen. Dabei zeigt ein Wahrscheinlichkeits-Zeitwert einen Zeitwert der statistischen Verteilung an (z.B. den Mittelwert, den Median, Quartile, Perzentile etc.).

Dabei kann das Bestimmen von Prognoseinformationen des mindestens einen erwarteten Eingriffs ferner ein Bestimmen eines frühesten Startzeitpunkts und/oder Endzeitpunkts des erwarteten Eingriffs basierend auf dem ersten Wahrscheinlichkeits-Zeitwert, umfassen. Dabei kann das Bestimmen des frühesten Startzeitpunkts ein Bestimmen einer bereits verstrichenen Dauer der aktuell ausgeführten Sequenz, ein Reduzieren des ersten Wahrscheinlichkeits-Zeitwerts um die bestimmte, bereits verstrichene Dauer und ein Hinzufügen des um die bereits verstrichene Dauer reduzierten ersten Wahrscheinlichkeits-Zeitwerts zu einem aktuellen Zeitpunkt, umfassen. Bei "Zeitpunkten" wie hierin verwendet kann es sich beispielsweise um eine Uhrzeit handeln.

Alternativ oder zusätzlich kann das Bestimmen von Prognoseinformationen des mindestens einen erwarteten Eingriffs ferner ein Bestimmen eines wahrscheinlichsten Startzeitpunkts und/oder Endzeitpunkts des erwarteten Eingriffs basierend auf dem zweiten Wahrscheinlichkeits-Zeitwert, umfassen. Dabei kann das Bestimmen des wahrscheinlichsten Startzeitpunkts ein Bestimmen einer bereits verstrichenen Dauer der aktuell ausgeführten Sequenz, Reduzieren des zweiten Wahrscheinlichkeits-Zeitwerts um die bestimmte, bereits verstrichene Dauer und Hinzufügen des um die bereits verstrichene Dauer reduzierten zweiten Wahrscheinlichkeits-Zeitwerts zu einem aktuellen Zeitpunkt, umfassen.

Alternativ oder zusätzlich kann das Bestimmen von Prognoseinformationen des mindestens einen erwarteten Eingriffs ferner ein Bestimmen eines spätesten Startzeitpunkts und/oder Endzeitpunkts des erwarteten Eingriffs basierend auf dem dritten Wahrscheinlichkeits-Zeitwert, umfassen. Dabei kann das Bestimmen des spätesten Startzeitpunkts ein Bestimmen einer bereits verstrichenen Dauer der aktuell ausgeführten Sequenz, ein Reduzieren des dritten Wahrscheinlichkeits-Zeitwerts um die bestimmte, bereits verstrichene Dauer und ein Hinzufügen des um die bereits verstrichene Dauer reduzierten dritten Wahrscheinlichkeits-Zeitwerts zu einem aktuellen Zeitpunkt, umfassen.

In einem bevorzugten Aspekt umfasst das Bestimmen von Prognoseinformationen des mindestens einen erwarteten Eingriffs das Bestimmen des frühesten Startzeitpunkts, des wahrscheinlichsten Startzeitpunkts, des wahrscheinlichsten Endzeitpunkts und des spätesten Endzeitpunkts.

Das Bestimmen der oben genannten Endzeitpunkte des erwarteten Eingriffs kann beispielsweise durch eine Addition einer erwarteten Dauer des Eingriffs auf den zugehörigen Startzeitpunkt des erwarteten Eingriffs erfolgen.

In einem weiteren Aspekt kann das Anzeigen der aktualisierten Priorisierungsdefinition mittels eines oder mehrerer Informationselement(e) erfolgen. Dabei kann das Anzeigen der aktualisierten Priorisierungsdefinition mittels des einen oder der mehreren Informationselemente auf einem Satz von Eigenschaften basieren, welcher mit den Prognoseinformationen assoziiert ist.

In einem weiteren Aspekt kann der Satz von Eigenschaften eine Dauer der aktuell ausgeführten Sequenz, einen zeitlichen Abstand zwischen der aktuell ausgeführten Sequenz und einem Startzeitpunkt des erwarteten Eingriff, eine Dauer des erwarteten Eingriffs, einen zeitlichen Abstand zwischen der aktuell ausgeführten Sequenz und einem Startzeitpunkt einer dem erwarteten Eingriff nachfolgenden Sequenz, einen frühesten Startzeitpunkt und/oder Endzeitpunkt des erwarteten Eingriffs, einen wahrscheinlichsten Startzeitpunkt und/oder Endzeitpunkt des erwarteten Eingriffs, einen spätesten Startzeitpunkt und/oder Endzeitpunkt des erwarteten Eingriffs, eine Wahrscheinlichkeit eines Eintretens des erwarteten Eingriffs, und/oder eine einem Apparat zugeordnete Priorität der Priorisierungsreihenfolge für die Produktionsanlage, umfassen.

Durch das adaptive bzw. dynamische Anzeigen der aktualisierten Priorisierungsdefinition können zuvor verborgene Optimierungspotentiale innerhalb der Produktionsanlage (z.B. hinsichtlich der Ressourcenplanung für Eingriffe) einfacher gehoben werden.

In einem weiteren Aspekt wird für eine Vielzahl von Apparaten des Satzes von Apparaten (d.h. mindestens 2 Apparaten) der Produktionsanlage eine aktuell ausgeführte Sequenz bestimmt, wodurch eine Vielzahl von aktuell ausgeführten Sequenzen bestimmt werden und wodurch Prognoseinformationen einer Vielzahl von assoziierten erwarteten Eingriffen bestimmt werden. Dabei kann die aktualisierte Priorisierungsdefinition auf den Prognoseinformationen der Vielzahl von assoziierten erwarteten Eingriffen basieren.

In einem weiteren Aspekt kann die (aktualisierte) Priorisierungsdefinition ferner auf einer vordefinierten Priorisierungsreihenfolge zwischen den einzelnen Prozessen des Satzes von Prozessen und/oder Taktzeiten der einzelnen Apparate des Satzes von Apparaten basieren.

In einem weiteren Aspekt kann das Verfahren ein Erhalten eines Nutzerbefehls zur Änderung der Priorisierungsreihenfolge umfassen. Der Nutzerbefehl kann eine Priorisierung eines ersten Prozesses des Satzes von Prozessen gegenüber einem zweiten Prozess des Satzes von Prozessen und/oder eine Priorisierung eines ersten Apparats des Satzes von Apparaten gegenüber einem zweiten Apparat des Satzes von Apparaten, anzeigen. Dabei kann das Verfahren ferner ein Bestimmen einer neuen Priorisierungsreihenfolge der Prozesse und/oder Apparate basierend auf dem Nutzerbefehl umfassen. Dabei kann das Anzeigen der aktualisierten Priorisierungsdefinition ferner auf der neuen Priorisierungsreihenfolge basieren.

In einem weiteren Aspekt können die Produktionsdaten der Produktionsanlage Zeitinformationen über erfolgte Eingriffe innerhalb einer vorbestimmten Dauer, insbesondere 30 Tage, und/oder einer vorbestimmten Stichprobe, insbesondere 30 Partien, ausgehend von einem aktuellen Zeitpunkt, an dem die aktuell ausgeführte Sequenz ausgeführt wird, umfassen. Zusätzlich oder alternativ können die Produktionsdaten Messdaten umfassen und/oder diesen entsprechen, welche durch Sensoren und/oder Aktoren und/oder Datenschnittstellen der Prozesse und/oder der Apparate und/oder der Produktionsanlage gemessen wurden.

In einem weiteren Aspekt kann ein zeitlicher Abstand zwischen einer ersten Ausführungsiteration des Verfahrens und einer zweiten, nachfolgenden Ausführungsiteration des Verfahrens eine vordefinierte Dauer, insbesondere eine Minute, betragen.

Hierdurch kann sichergestellt werden, dass alle relevanten Produktionsdaten (z.B. relevant hinsichtlich der erfolgten Eingriffe) zur Analyse verwendet werden. Somit können aussagekräftige Prognoseinformationen bestimmt werden auf deren Basis und mittels der entsprechenden Priorisierungsdefinition Maßnahmen zur Ressourcenplanung bestimmt werden können. Ferner beinhaltet die Lösung durch die regelmäßige Aktualisierung selbst unter Verwendung eines statischen mathematischen Modells zur Bestimmung der Prognoseinformationen zwei Mechanismen der Selbstoptimierung:
Einerseits steigt grundsätzlich die Genauigkeit der Prognose, je weniger Sequenzen vor einem erwarteten Eingriff verbleiben. Dadurch fallen Schritt für Schritt die Schwankungen der abgelaufenen Sequenzen aus der Berechnung. Die prognostizierten Zeitpunkte für das früheste, das wahrscheinlichste und das späteste Auftreten eines erwarteten Eingriffs rücken somit immer dichter zusammen.

Anderseits führt erfahrungsgemäß eine genauere Planung eines Produktionsprozesses zu stabileren Dauern der Sequenzen, was insbesondere für Eingriffe in den Prozess gilt, da diese typischerweise hauptverantwortlich für Schwankungen im Prozess sind. Geringere Schwankungen wiederum führen zu zuverlässigeren Prognosen, die ihrerseits die Planung eines Produktionsprozesses genauer machen.

In einem Aspekt betrifft die Erfindung eine Datenverarbeitungsvorrichtung umfassend Mittel zum Durchführen der Verfahren nach irgendeinem der erwähnten Aspekte.

In einem Aspekt betrifft die Erfindung ein Computerprogramm oder ein computerlesbares Medium, auf dem ein Computerprogramm gespeichert ist, wobei das Computerprogramm Anweisungen umfasst, die, wenn das Computerprogramm von einem Computer ausgeführt wird, den Computer veranlassen, das Verfahren nach irgendeinem der erwähnten Aspekte auszuführen.

### KURZBESCHREIBUNG DER FIGUREN

Die Erfindung kann anhand der folgenden Figuren besser verstanden werden:
- Fig. 1:: Ein Flussdiagramm eines Verfahrens zur Eingriffsprognose gemäß einer beispielhaften Ausführungsform der vorliegenden Erfindung.
- Fig. 2:: Eine Datenverarbeitungsvorrichtung gemäß einer beispielhaften Ausführungsform der vorliegenden Erfindung.
- Fig. 3:: Ein Informationselement zur Anzeige einer Priorisierungsdefinition gemäß einer beispielhaften Ausführungsform der vorliegenden Erfindung.
- Fig. 4:: Eine Anzeige einer Priorisierungsdefinition gemäß einer beispielhaften Ausführungsform der vorliegenden Erfindung.

### DETAILLIERTE BESCHREIBUNG

Im Folgenden werden repräsentative Ausführungsformen, die in den beigefügten Zeichnungen dargestellt sind, erläutert. Es sollte verstanden werden, dass die abgebildeten Ausführungsformen und die folgenden Beschreibungen sich auf Beispiele beziehen, die nicht dazu gedacht sind, die Ausführungsformen auf eine bevorzugte Ausführungsform zu beschränken.

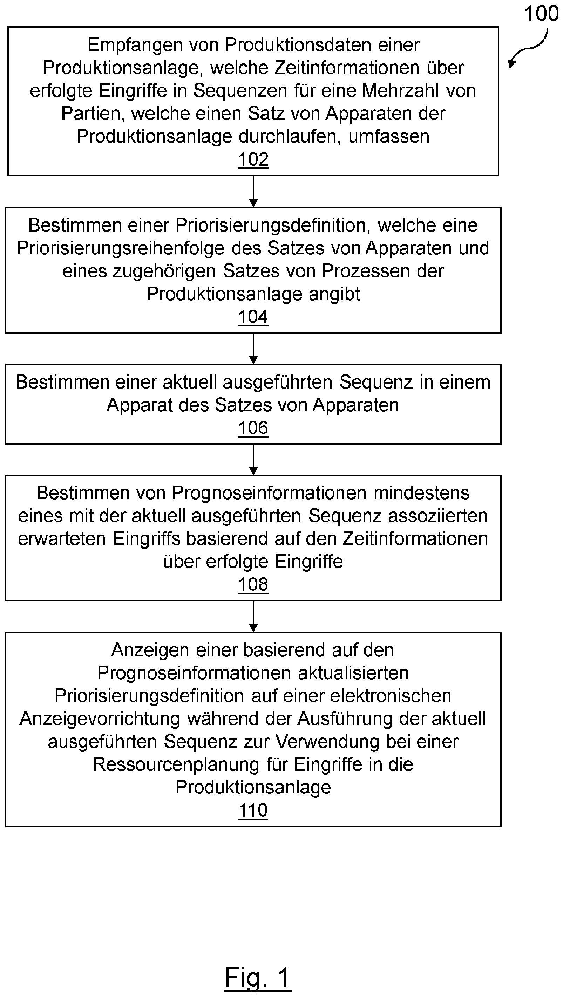

Fig. 1 zeigt ein Flussdiagramm eines Verfahrens 100 zur Eingriffsprognose. Das Verfahren 100 kann beispielsweise zur Eingriffsprognose in eine chemische Produktionsanlage verwendet werden. Das Verfahren 100 kann computer-implementiert bzw. computergestützt sein.

Das Verfahren 100 kann ein Empfangen (Schritt 102) von Produktionsdaten einer Produktionsanlage umfassen, welche Zeitinformationen über erfolgte Eingriffe in Sequenzen für eine Mehrzahl von Partien, welche einen Satz von Apparaten der Produktionsanlage durchlaufen umfassen.

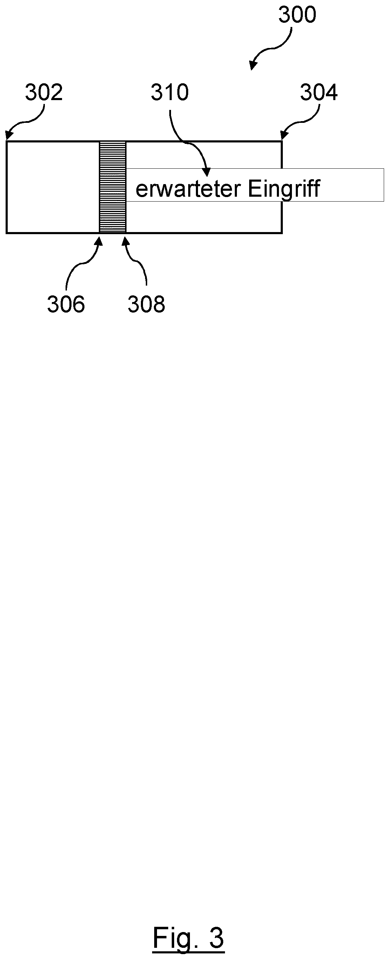

Das Verfahren 100 kann ein Bestimmen (Schritt 104) einer Priorisierungsdefinition (wie z.B. in Bezug auf Fig. 3 erklärt) umfassen, welche eine Priorisierungsreihenfolge des Satzes von Apparaten und eines zugehörigen Satzes von Prozessen der Produktionsanlage angibt.

Das Verfahren 100 kann ein Bestimmen (Schritt 106) einer aktuell ausgeführten Sequenz in einem Apparat des Satzes von Apparaten umfassen.

Das Verfahren 100 kann ein Bestimmen (Schritt 108) von Prognoseinformationen mindestens eines mit der aktuell ausgeführten Sequenz assoziierten erwarteten Eingriffs basierend auf den Zeitinformationen über erfolgte Eingriffe umfassen.

Das Verfahren 100 kann ein Anzeigen (Schritt 110) einer basierend auf den Prognoseinformationen aktualisierten Priorisierungsdefinition auf einer elektronischen Anzeigevorrichtung während der Ausführung der aktuell ausgeführten Sequenz zur Verwendung bei einer Ressourcenplanung für Eingriffe in die Produktionsanlage

Das Verfahren 100 kann ferner irgendeinen der oben erwähnten Aspekte umfassen.

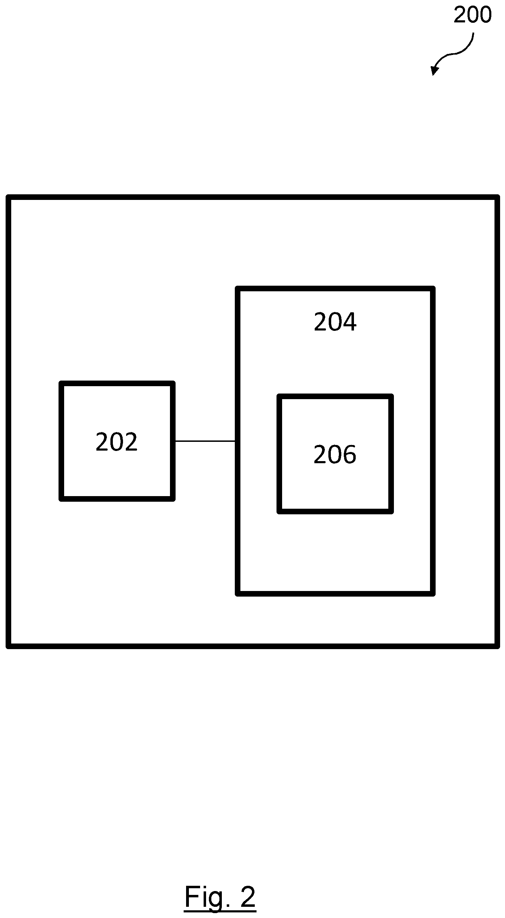

Fig. 2 zeigt eine Datenverarbeitungsvorrichtung 200 gemäß einer beispielhaften Ausführungsform der vorliegenden Erfindung.

Die Datenverarbeitungsvorrichtung kann Mittel zum Durchführen des Verfahrens gemäß der vorliegenden Offenbarung umfassen (z.B. das Verfahren 100). Bei den Mitteln kann es sich um einen Prozessor 202 und einen Speicher 204 handeln. Der Prozessor 202 und der Speicher 204 können wirkverbunden sein. Im Speicher 204 kann ein Computerprogramm 206 gespeichert sein, wobei das Computerprogramm 206 Anweisungen umfasst, die, wenn das Computerprogramm 206 von einem Computer oder der Datenverarbeitungsvorrichtung 200 ausgeführt wird, den Computer veranlassen, das Verfahren nach irgendeinem der erwähnten Aspekte (z.B. das Verfahren 100) auszuführen.

Fig. 3 zeigt ein Informationselement 300 zum Anzeigen einer Priorisierungsdefinition gemäß einer beispielhaften Ausführungsform der vorliegenden Erfindung. Das Informationselement 300 stellt einen erwarteten Eingriff dar und wird durch das mit durchgezogener Linie dargestellte Rechteck visualisiert. Dabei kann die Art und Weise, in welcher das Informationselement 300 angezeigt wird, auf einem Satz von Eigenschaften basieren, welcher mit zugehörigen Prognoseinformationen assoziiert ist. Im gezeigten Beispiel basiert die Anzeige des Informationselement 300 beispielsweise auf dem frühsten Startzeitpunkt 302 des erwarteten Eingriffs, dem spätesten Endzeitpunkt 304 des erwarteten Eingriffs, dem wahrscheinlichsten Startzeitpunkt 306 des erwarteten Eingriffs sowie dem wahrscheinlichsten Endzeitpunkt 308 des erwarteten Eingriffs sowie der Dauer des erwarteten Eingriffs (d.h. die Länge des horizontal schraffierten Rechtecks bzw. die Distanz zwischen dem wahrscheinlichsten Startzeitpunkt 306 und dem wahrscheinlichsten Endzeitpunkt 308). Zusätzlich kann das Informationselement 300 einen Identifizierer des erwarteten Eingriffs 310 (z.B. mittels einer ID oder Beschreibung des erwarteten Eingriffs, z.B. ID = erwarteter Eingriff) enthalten.

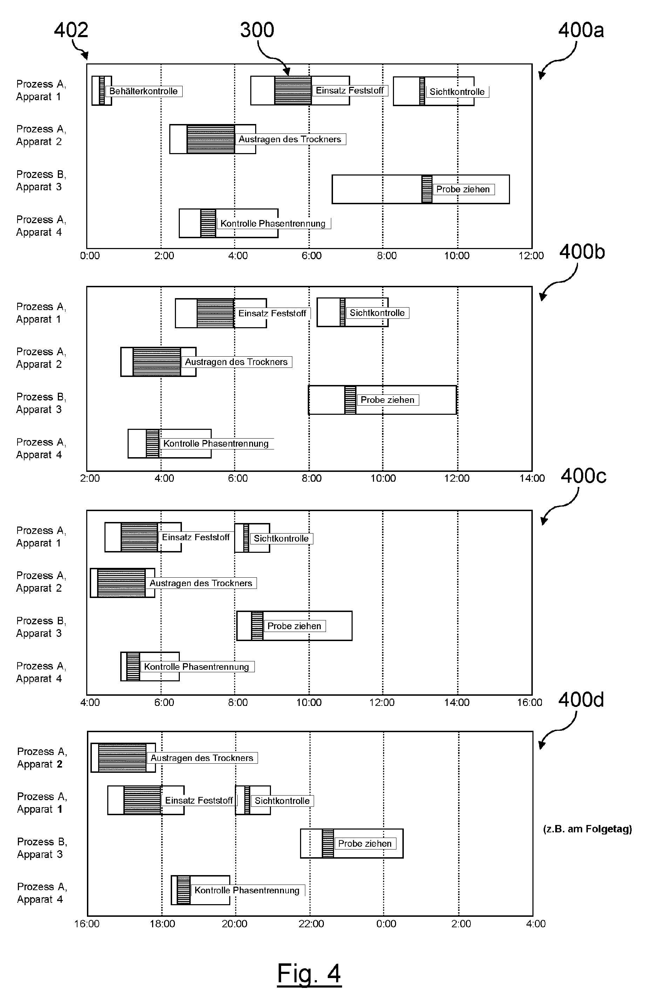

Fig. 4 zeigt eine Anzeige einer Priorisierungsdefinition 400a-d gemäß einer beispielhaften Ausführungsform der vorliegenden Erfindung. Fig. 4 zeigt anhand von bis zu sechs erwarteten Eingriffen wie eine Priorisierungsdefinition 400a-d über die Zeit aktualisiert wird. Dabei ist jeder erwartete Eingriff durch ein entsprechendes Informationselement 300 dargestellt. Je Apparat können ein oder mehrere Informationselemente 300 auftreten.

Auf der y-Achse der jeweiligen Priorisierungsdefinitionen 400a-d sind die Prozesse (z.B. mittels einer ID wie A und B) und Apparate dieser Prozesse (z.B. mittels einer ID wie 1, 2, 3 und 4) gemäß absteigender Priorität dargestellt.

Auf der x-Achse ist ein in die Zukunft gerichteter Zeitstrahl aufgetragen, ausgehend vom aktuellen Zeitpunkt, welcher durch die linke Seite des Rechtecks 402 dargestellt ist.

So zeigt die Priorisierungsdefinition 400a den Stand zum Zeitpunkt 0:00 Uhr, die Priorisierungsdefinition 400b den Stand zum Zeitpunkt 2:00 Uhr, die Priorisierungsdefinition 400c den Stand zum Zeitpunkt 4:00 Uhr und die Priorisierungsdefinition 400d den Stand zum Zeitpunkt 16:00 Uhr eines anderen Tages (z.B. des Folgetages).

Es ist erkennbar, wie die gezeigten Informationselemente 300 von der Priorisierungsdefinition 400a bis zur Priorisierungsdefinition 400c tendenziell schmaler werden (d.h. die zeitlichen Abstände zwischen frühestem Start- und spätestem Endzeitpunkt werden kleiner) während sie sich der linken Seite des Rechtecks 402 annähern, da die Genauigkeit der zugrundeliegenden Prognoseinformationen steigt.

Dabei ist ersichtlich, wie sich von der Priorisierungsdefinition 400a bis zur Priorisierungsdefinition 400c, die Informationselemente 300 aller erwarteten Eingriffe dem aktuellen Zeitpunkt (linken Seite des Rechtecks 402) mit einer ihnen eigenen Geschwindigkeit annähern. Diese Geschwindigkeit der Annäherung wird vom aktuellen Voranschreiten der Verfahrensschritte des Apparates vorgegeben und kann sich von Apparat zu Apparat sowie über die Zeit unterscheiden. Beispielsweise verschiebt sich der wahrscheinlichste Startzeitpunkt des erwarteten Eingriffs "Kontrolle Phasentrennung" von ca. 3:00 Uhr (siehe Priorisierungsdefinition 400a) auf ca. 5:00 Uhr (siehe Priorisierungsdefinition 400c). In diesem Apparat ist es also im betrachteten Zeitraum zu einer Verzögerung gekommen. Dahingegen verschiebt sich der wahrscheinlichste Startzeitpunkt des erwarteten Eingriffs "Probe ziehen" von ca. 9:00 Uhr (siehe Priorisierungsdefinition 400a) auf ca. 8:30 (siehe Priorisierungsdefinition 400c). In diesem Apparat sind die Verfahrensschritte also schneller als erwartet durchgelaufen.

Ist ein Eingriff abgearbeitet so kann dieser erneut in der Priorisierungsdefinition angezeigt werden (z.B. sobald der früheste Startzeitpunkt dieses erwarteten Eingriffs einer neuen Partie wieder innerhalb des vordefinierten, zukünftigen Zeitraums wie z.B. den nächsten 12 Stunden liegt).

In den gezeigten Priorisierungsdefinitionen 400a-d, entspricht die Position der Apparate 1-4 ihrer Priorität. Falls die Apparate 1-4 unterschiedlichen Prozessen angehören (z.B. den Prozessen A und B, wie im Beispiel dargestellt), so entspricht ihre gezeigte Position ihrer Priorität innerhalb der Priorisierungsdefinition 400a-d, welche jedoch nicht zwangsläufig ihrer Priorität innerhalb ihrer eigenen Prozesse entsprechen muss. Falls Apparate 1-4 demselben Prozess angehören, so entspricht ihre gezeigte Position ihrer Priorität innerhalb der Priorisierungsreihenfolge und somit auch innerhalb der Priorisierungsdefinition 400a-d.

Im gezeigten Beispiel kann Apparat 1 zum dargestellten Zeitpunkt ein Bottle-Neck Apparat des Prozesses mit der höchsten Priorität (z.B. Prozess A) sein (d.h. der für die Produktionsanlage relevanteste Engstellenapparat). Apparate 2-4 können zu diesem Zeitpunkt weitere Engstellenapparate sein. Ob ein Apparat ein Engstellenapparat oder sogar der Bottle-Neck Apparat ist, kann basierend auf seiner Batchzeit innerhalb der vorbestimmten Dauer, insbesondere 30 Tage, und/oder der vorbestimmten Stichprobe, insbesondere 30 Partien, ausgehend von dem aktuellen Zeitpunkt bestimmt werden.

Typischerweise wird hierfür eine statistische Kenngröße wie z.B. der Median verwendet. Ferner ist es möglich zur Bestimmung auch einen Verlauf der aktuell ausgeführten Sequenz zu berücksichtigen.

Zum Zeitpunkt der Priorisierungsdefinition 400c kann es bei limitierten Ressourcen (z.B. nur einem Mitarbeiter im Produktionsbetrieb) zu einer Maximierung der Wertschöpfung kommen, wenn der zuerst anstehende, erwartete Eingriff "Austragen des Trockners" zugunsten des danach anstehenden, erwarteten Eingriffs "Einsatz Feststoff" des aktuellen Bottle-Neck Apparates 1 zurückgestellt wird und erst danach bearbeitet wird.

Zum Zeitpunkt der Priorisierungsdefinition 400d hingegen kann Apparat 2 ein Bottle-Neck Apparat des Prozesses mit der höchsten Priorität (z.B. Prozess A) sein (d.h. der für die Produktionsanlage zu diesem Zeitpunkt relevanteste Engstellenapparat). Zum Zeitpunkt der Priorisierungsdefinition 400d kann es bei limitierten Ressourcen (z.B. nur einem Mitarbeiter im Produktionsbetrieb) zu einer Maximierung der Wertschöpfung kommen, wenn jetzt der zuerst anstehende, erwartete Eingriff "Austragen des Trockners" des aktuellen Bottle-Neck Apparates 2 bearbeitet wird und danach der erwartete Eingriff "Einsatz Feststoff".

Wenn Mitarbeiter eines Produktionsbetriebs (z.B. mit 100 Apparaten) bei limitierten Ressourcen die hier beispielhaft dargestellten Entscheidungen ohne die hier beschriebene Erfindung treffen müssen, kann es leicht zu falschen Priorisierungen kommen. Dies gilt insbesondere, aber nicht ausschließlich, im Schichtbetrieb. Die beschriebene Erfindung kann helfen diese falschen Priorisierungen zu reduzieren und dadurch die Wertschöpfung des Produktionsbetriebs zu steigern.

Die oben beispielhaft dargestellte Änderung der Priorisierungsdefinition kann zwischen beliebigen Engstellenapparaten erfolgen.

Die Priorisierungsdefinition kann ferner mittels eines Nutzerbefehls zur Änderung der Priorisierungsreihenfolge aktualisiert werden.

Der hier verwendete Begriff "und/oder" schließt alle Kombinationen von einem oder mehreren der aufgeführten Aspekte ein und kann mit "/" abgekürzt werden.

Obwohl einige Aspekte im Zusammenhang mit einem Gerät beschrieben wurden, ist es klar, dass diese Aspekte auch eine Beschreibung des entsprechenden Verfahrens darstellen, wobei ein Block oder eine Vorrichtung einem Verfahrensschritt oder einem Merkmal eines Verfahrensschritts entspricht. Analog dazu stellen Aspekte, die im Zusammenhang mit einem Verfahrensschritt beschrieben werden, auch eine Beschreibung eines entsprechenden Blocks oder Elements oder Merkmals eines entsprechenden Geräts dar.

Ausführungsformen der vorliegenden Offenbarung können auf einem Computersystem implementiert werden. Bei dem Computersystem kann es sich um ein lokales Computergerät (z. B. Personalcomputer, Laptop, Tablet-Computer oder Mobiltelefon) mit einem oder mehreren Prozessoren und einem oder mehreren Speichergeräten handeln oder um ein verteiltes Computersystem (z. B. ein Cloud-Computersystem mit einem oder mehreren Prozessoren und einem oder mehreren Speichergeräten, die an verschiedenen Orten verteilt sind, z. B. an einem lokalen Client und/oder einer oder mehreren entfernten Serverfarmen und/oder Datenzentren). Das Computersystem kann jede beliebige Schaltung oder Kombination von Schaltungen umfassen. In einer Ausführungsform kann das Computersystem einen oder mehrere Prozessoren umfassen, die von beliebigem Typ sein können. Der hier verwendete Begriff "Prozessor" kann jede Art von Rechenschaltung bezeichnen, z. B. einen Mikroprozessor, einen Mikrocontroller, einen CISC-Mikroprozessor (Complex Instruction Set Computing), einen RISC-Mikroprozessor (Reduced Instruction Set Computing), einen VLlW-Mikroprozessor (Very Long Instruction Word), einen Grafikprozessor, einen digitalen Signalprozessor (DSP), einen Mehrkernprozessor, ein FPGA (Field Programmable Gate Array) oder jede andere Art von Prozessor oder Verarbeitungsschaltung. Andere Arten von Schaltkreisen, die im Computersystem enthalten sein können, können ein kundenspezifischer Schaltkreis, ein anwendungsspezifischer integrierter Schaltkreis (ASIC) oder ähnliches sein, wie z. B. ein oder mehrere Schaltkreise (z. B. ein Kommunikationsschaltkreis) zur Verwendung in drahtlosen Geräten wie Mobiltelefonen, Tablet-Computern, Laptop-Computern, Zwei-Wege-Funkgeräten und ähnlichen elektronischen Systemen. Das Computersystem kann eine oder mehrere Speichervorrichtungen enthalten, die ein oder mehrere für die jeweilige Anwendung geeignete Speicherelemente umfassen können, wie z. B. einen Hauptspeicher in Form eines Direktzugriffsspeichers (RAM), eine oder mehrere Festplatten und/oder ein oder mehrere Laufwerke, die mit Wechselmedien wie Compact Discs (CD), Flash-Speicherkarten, digitalen Videodisks (DVD) und dergleichen umgehen. Das Computersystem kann auch ein Anzeigegerät, einen oder mehrere Lautsprecher und eine Tastatur und/oder ein Steuergerät enthalten, das eine Maus, einen Trackball, einen Touchscreen, ein Spracherkennungsgerät oder jedes andere Gerät umfassen kann, das es einem Systembenutzer ermöglicht, Informationen in das Computersystem einzugeben und Informationen von ihm zu empfangen.

Einige oder alle Verfahrensschritte können von einem Hardware-Gerät (oder unter Verwendung eines solchen) ausgeführt werden, wie z. B. einem Prozessor, einem Mikroprozessor, einem programmierbaren Computer oder einer elektronischen Schaltung. In einigen Ausführungsformen können einige oder mehrere der wichtigsten Verfahrensschritte von einem solchen Gerät ausgeführt werden.

Abhängig von bestimmten Implementierungsanforderungen können Ausführungsformen der vorliegenden Offenbarung in Hardware oder in Software implementiert werden. Die Implementierung kann unter Verwendung eines nicht-übertragbaren Speichermediums wie eines digitalen Speichermediums, beispielsweise einer Diskette, einer DVD, einer Blu-Ray, einer CD, eines ROM, eines PROM, eines EPROM, eines EEPROM oder eines FLASH-Speichers erfolgen, auf dem elektronisch lesbare Steuersignale gespeichert sind, die mit einem programmierbaren Computersystem zusammenarbeiten (oder zusammenarbeiten können), so dass das jeweilige Verfahren durchgeführt wird. Daher kann das digitale Speichermedium computerlesbar sein.

Einige Ausführungsformen gemäß der vorliegenden Offenbarung umfassen einen Datenträger mit elektronisch lesbaren Steuersignalen, die mit einem programmierbaren Computersystem zusammenarbeiten können, so dass eines der hier beschriebenen Verfahren durchgeführt wird. Im Allgemeinen können Ausführungsformen der vorliegenden Offenbarung als Computerprogrammprodukt mit einem Programmcode implementiert werden, wobei der Programmcode zur Ausführung eines der Verfahren dient, wenn das Computerprogrammprodukt auf einem Computer läuft. Der Programmcode kann zum Beispiel auf einem maschinenlesbaren Träger gespeichert sein.

Andere Ausführungsformen umfassen das Computerprogramm zur Durchführung eines der hierin beschriebenen Verfahren, das auf einem maschinenlesbaren Träger gespeichert ist.

Mit anderen Worten, eine Ausführungsform der vorliegenden Offenbarung ist daher ein Computerprogramm mit einem Programmcode zur Durchführung eines der hierin beschriebenen Verfahren, wenn das Computerprogramm auf einem Computer läuft.

Eine weitere Ausführungsform der vorliegenden Offenbarung ist daher ein Speichermedium (oder ein Datenträger oder ein computerlesbares Medium), auf dem das Computerprogramm zur Durchführung eines der hier beschriebenen Verfahren gespeichert ist, wenn es von einem Prozessor ausgeführt wird. Der Datenträger, das digitale Speichermedium oder das aufgezeichnete Medium sind typischerweise greifbar und/oder nicht-übertragbar. Eine weitere Ausführungsform der vorliegenden Offenbarung ist ein Gerät wie hierin beschrieben, das einen Prozessor und das Speichermedium umfasst.

Eine weitere Ausführungsform der vorliegenden Offenbarung ist daher ein Datenstrom oder eine Folge von Signalen, die das Computerprogramm zur Durchführung eines der hier beschriebenen Verfahren darstellen. Der Datenstrom oder die Signalfolge kann beispielsweise so konfiguriert sein, dass er/sie über eine Datenkommunikationsverbindung, z.B. über das Internet, übertragen wird.

Eine weitere Ausführungsform umfasst ein Verarbeitungsmittel, z. B. einen Computer oder ein programmierbares Logikgerät, das so konfiguriert oder angepasst ist, dass es eines der hierin beschriebenen Verfahren durchführen kann.

Eine weitere Ausführungsform umfasst einen Computer, auf dem das Computerprogramm zur Durchführung eines der hierin beschriebenen Verfahren installiert ist.

Eine weitere Ausführungsform gemäß der vorliegenden Offenbarung umfasst eine Vorrichtung oder ein System, die bzw. das so konfiguriert ist, dass sie bzw. es ein Computerprogramm zur Durchführung eines der hierin beschriebenen Verfahren an einen Empfänger überträgt (z. B. auf elektronischem oder optischem Wege). Bei dem Empfänger kann es sich beispielsweise um einen Computer, ein mobiles Gerät, ein Speichergerät oder dergleichen handeln. Die Vorrichtung oder das System kann zum Beispiel einen Dateiserver zur Übertragung des Computerprogramms an den Empfänger umfassen.

In einigen Ausführungsformen kann eine programmierbare Logikvorrichtung (z. B. ein feldprogrammierbares Gate-Array) verwendet werden, um einige oder alle Funktionen der hier beschriebenen Verfahren auszuführen. In einigen Ausführungsformen kann ein feldprogrammierbares Gate-Array mit einem Mikroprozessor zusammenarbeiten, um eines der hier beschriebenen Verfahren durchzuführen. Im Allgemeinen werden die Verfahren vorzugsweise von einem beliebigen Hardware-Gerät durchgeführt.

## Patentansprüche

1. Ein computer-implementiertes Verfahren (100) zur Eingriffsprognose in eine chemische Produktionsanlage, wobei das Verfahren umfasst:
Empfangen (102) von Produktionsdaten der Produktionsanlage, welche Zeitinformationen über erfolgte Eingriffe in Sequenzen für eine Mehrzahl von Partien, welche einen Satz von Apparaten der Produktionsanlage durchlaufen, umfassen;
Bestimmen (104) einer Priorisierungsdefinition (400), welche eine Priorisierungsreihenfolge des Satzes von Apparaten und eines zugehörigen Satzes von Prozessen der Produktionsanlage angibt;
Bestimmen (106) einer aktuell ausgeführten Sequenz in einem Apparat des Satzes von Apparaten;
Bestimmen (108) von Prognoseinformationen mindestens eines mit der aktuell ausgeführten Sequenz assoziierten erwarteten Eingriffs basierend auf den Zeitinformationen über erfolgte Eingriffe; und
Anzeigen (110) einer basierend auf den Prognoseinformationen aktualisierten Priorisierungsdefinition (400) auf einer elektronischen Anzeigevorrichtung während der Ausführung der aktuell ausgeführten Sequenz zur Verwendung bei einer Ressourcenplanung für Eingriffe in die Produktionsanlage.

2. Verfahren nach Anspruch 1, wobei die Prognoseinformationen Zeitinformationen und zugehörige Wahrscheinlichkeitsinformationen für den mindestens einen erwarteten Eingriff umfassen; und
wobei das Bestimmen von Prognoseinformationen des mindestens einen erwarteten Eingriffs umfasst:
Bestimmen eines oder mehrerer zeitlicher Abstände basierend auf den Zeitinformationen über die erfolgten Eingriffen der aktuell ausgeführten Sequenz, um die Zeitinformationen für den mindestens einen erwarteten Eingriff zu erhalten; und
Bestimmen einer statistischen Verteilung der bestimmten einen oder mehreren zeitlichen Abstände, um die Wahrscheinlichkeitsinformationen für den mindestens einen erwarteten Eingriff zu erhalten.

3. Verfahren nach Anspruch 2, wobei die statistische Verteilung einen ersten Wahrscheinlichkeits-Zeitwert, insbesondere ein erstes Quartil, einen zweiten Wahrscheinlichkeits-Zeitwert, insbesondere einen Median, und einen dritten Wahrscheinlichkeits-Zeitwert, insbesondere ein drittes Quartil, umfasst, und;
wobei das Bestimmen von Prognoseinformationen des mindestens einen erwarteten Eingriffs ferner umfasst:
Bestimmen eines frühesten Startzeitpunkts und/oder Endzeitpunkts des erwarteten Eingriffs basierend auf dem ersten Wahrscheinlichkeits-Zeitwert;
Bestimmen eines wahrscheinlichsten Startzeitpunkts und/oder Endzeitpunkts des erwarteten Eingriffs basierend auf dem zweiten Wahrscheinlichkeits-Zeitwert; und/oder
Bestimmen eines spätesten Startzeitpunkts und/oder Endzeitpunkts des erwarteten Eingriffs basierend auf dem dritten Wahrscheinlichkeits-Zeitwert.

4. Das Verfahren nach Anspruch 3, wobei das Bestimmen des frühesten Startzeitpunkts umfasst:
Bestimmen einer bereits verstrichenen Dauer der aktuell ausgeführten Sequenz;
Reduzieren des ersten Wahrscheinlichkeits-Zeitwerts um die bestimmte, bereits verstrichene Dauer; und
Hinzufügen des um die bereits verstrichene Dauer reduzierten ersten Wahrscheinlichkeits-Zeitwerts zu einem aktuellen Zeitpunkt.

5. Das Verfahren nach irgendeinem der Ansprüche 3-4, wobei das Bestimmen des wahrscheinlichsten Startzeitpunkts umfasst:
Bestimmen einer bereits verstrichenen Dauer der aktuell ausgeführten Sequenz;
Reduzieren des zweiten Wahrscheinlichkeits-Zeitwerts um die bestimmte, bereits verstrichene Dauer; und
Hinzufügen des um die bereits verstrichene Dauer reduzierten zweiten Wahrscheinlichkeits-Zeitwerts zu einem aktuellen Zeitpunkt.

6. Das Verfahren nach irgendeinem der Ansprüche 3-5, wobei das Bestimmen des spätesten Startzeitpunkts umfasst:
Bestimmen einer bereits verstrichenen Dauer der aktuell ausgeführten Sequenz;
Reduzieren des dritten Wahrscheinlichkeits-Zeitwerts um die bestimmte, bereits verstrichene Dauer; und
Hinzufügen des um die bereits verstrichene Dauer reduzierten dritten Wahrscheinlichkeits-Zeitwerts zu einem aktuellen Zeitpunkt.

7. Das Verfahren nach irgendeinem der Ansprüche 1-6, wobei das Anzeigen der aktualisierten Priorisierungsdefinition (400) mittels eines Informationselements (300) erfolgt; und
wobei das Anzeigen der aktualisierten Priorisierungsdefinition (400) mittels des Informationselements (300) auf einem Satz von Eigenschaften basiert, welcher mit den Prognoseinformationen assoziiert ist.

8. Das Verfahren nach Anspruch 7, wobei der Satz von Eigenschaften umfasst:
eine Dauer der aktuell ausgeführten Sequenz;
einen zeitlichen Abstand zwischen der aktuell ausgeführten Sequenz und einem Startzeitpunkt des erwarteten Eingriff;
eine Dauer des erwarteten Eingriffs;
einen zeitlichen Abstand zwischen der aktuell ausgeführten Sequenz und einem Startzeitpunkt einer dem erwarteten Eingriff nachfolgenden Sequenz;
einen frühesten Startzeitpunkt und/oder Endzeitpunkt des erwarteten Eingriffs;
einen wahrscheinlichsten Startzeitpunkt und/oder Endzeitpunkt des erwarteten Eingriffs;
einen spätesten Startzeitpunkt und/oder Endzeitpunkt des erwarteten Eingriffs;
eine Wahrscheinlichkeit eines Eintretens des Eingriffs; und/oder
eine einem Apparat zugeordnete Priorität der Priorisierungsreihenfolge für die Produktionsanlage.

9. Das Verfahren nach irgendeinem der Ansprüche 1-8, wobei für eine Vielzahl von Apparaten des Satzes von Apparaten der Produktionsanlage eine aktuell ausgeführte Sequenz bestimmt wird, wodurch eine Vielzahl von aktuell ausgeführten Sequenzen bestimmt wird und wodurch Prognoseinformationen einer Vielzahl von assoziierten erwarteten Eingriffen bestimmt werden; und
wobei die aktualisierte Priorisierungsdefinition (400) auf den Prognoseinformationen der Vielzahl von assoziierten erwarteten Eingriffen basiert.

10. Das Verfahren nach irgendeinem der Ansprüche 1-9, wobei die aktualisierte Priorisierungsdefinition (400) ferner auf einer vordefinierten Priorisierungsreihenfolge zwischen den einzelnen Prozessen des Satzes von Prozessen und/oder Taktzeiten der einzelnen Apparate des Satzes von Apparaten basiert.

11. Das Verfahren nach Anspruch 10, ferner umfassend:
Erhalten eines Nutzerbefehls zur Änderung der Priorisierungsreihenfolge, wobei der Nutzerbefehl anzeigt:
eine Priorisierung eines ersten Prozesses des Satzes von Prozessen gegenüber einem zweiten Prozess des Satzes von Prozessen; und/oder
eine Priorisierung eines ersten Apparats des Satzes von Apparaten gegenüber einem zweiten Apparat des Satzes von Apparaten;
Bestimmen einer neuen Priorisierungsreihenfolge der Prozesse und/oder Apparate basierend auf dem Nutzerbefehl;
wobei das Anzeigen der aktualisierten Priorisierungsdefinition (400) ferner auf der neuen Priorisierungsreihenfolge basiert.

12. Verfahren nach irgendeinem der Ansprüche 1-11, wobei die Produktionsdaten der Produktionsanlage Zeitinformationen über erfolgte Eingriffe innerhalb einer vorbestimmten Dauer, insbesondere 30 Tage, und/oder einer vorbestimmten Stichprobe, insbesondere 30 Partien, ausgehend von einem aktuellen Zeitpunkt, an dem die aktuell ausgeführte Sequenz ausgeführt wird, umfassen; und/oder wobei die Produktionsdaten Messdaten umfassen und/oder diesen entsprechen, welche durch Sensoren und/oder Aktoren und/oder Datenschnittstellender Prozesse und/oder der Apparate und/oder der Produktionsanlage gemessen wurden.

13. Das Verfahren nach irgendeinem der Ansprüche 1-12, wobei ein zeitlicher Abstand zwischen einer ersten Ausführungsiteration des Verfahrens und einer zweiten, nachfolgenden Ausführungsiteration des Verfahrens eine vordefinierte Dauer, insbesondere eine Minute, beträgt.

14. Eine Datenverarbeitungsvorrichtung (200), welche Mittel zur Ausführung des Verfahrens (100) nach irgendeinem der vorhergehenden Ansprüche 1-12 umfasst.

15. Ein Computerprogramm (206) oder ein computerlesbares Medium, auf dem ein Computerprogramm (206) gespeichert ist, wobei das Computerprogramm (206) Befehle umfasst, die bei der Ausführung des Computerprogramms (206) durch eine Datenverarbeitungsvorrichtung (200) diese veranlassen, das Verfahren (100) nach irgendeinem der vorhergehenden Ansprüche 1-12 auszuführen.
